# EUROPEAN PATENT SPECIFICATION

(11) **EP 4 607 057 B1**
(45) Date of publication and mention of the grant of the patent: **11.11.2026**
(21) Application number: 25165236.8
(22) Date of filing: 21.03.2025
(51) Int. Cl.: F16F 9/04

(54) **AIR SPRING CLAMPING MECHANISM**
KLEMMVORRICHTUNG FÜR LUFTFEDER
MÉCANISME DE SERRAGE À RESSORT PNEUMATIQUE

(30) Priority: 24.05.2024 CZ 20240215
(43) Date of publication of application: 27.08.2025
(73) Proprietor: Spis, Marek, 46601 Jablonec nad Nisou (CZ)
(72) Inventor: Spis, Marek, 46601 Jablonec nad Nisou (CZ)
(74) Representative: Originvent

(56) References cited:
- EP-B1- 3 176 462
- CZ-U1- 12 953
- CZ-U1- 30 191

## Description

### TECHNICAL FIELD

The invention relates to a clamping mechanism for an air spring, which includes structural modifications to a clamping ring and a bolted connection that is used in the completion and assembly of the air spring, and that is used to secure the air spring cover to a rubber bellows. The invention also relates to an air spring provided with this clamping mechanism.

### BACKGROUND ART

At present, there are various designs of air springs and different ways of mechanically mounting them in the vehicle body or in the machine. Air spring designs have various embodiments which are determined by their use and generally include a combination of elements by which the sealing caps of the air spring are attached to the end of the rubber bellows, including various sleeves, clamping rings and profiles. By means of these assemblies, the air springs are subsequently attached to another fastening or mounting element which serves to secure them in the machine or to attach them to the vehicle chassis. These configurations do not always provide sufficient material strength and are not always suitable for automotive or heavy-duty applications.

Document CZ 30 191 U1 discloses a relevant air spring clamping mechanism comprising the features of the pre-amble of claim 1.

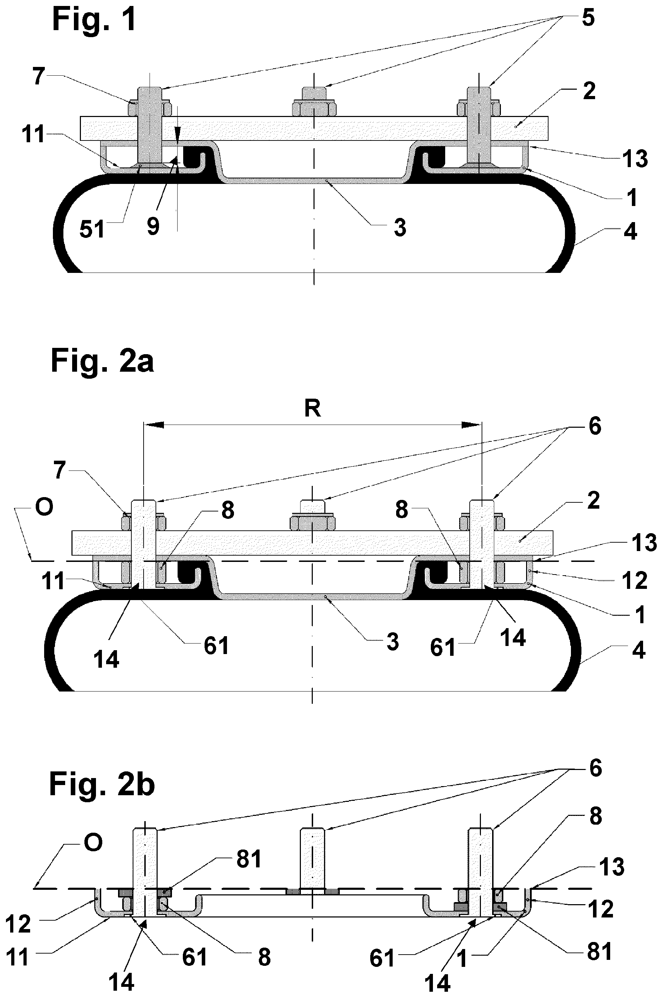

A solution is also known wherein in the existing design, the clamping ring is manufactured by welding the welding bolts in predetermined pitch circles and number corresponding to the holes in the air spring cover onto the steel moulding of the clamping ring, which is machined into its final form after moulding. The clamping ring thus produced is fitted or threaded onto the rubber bellows and the air spring cover is then slid onto it. The attachment and pressing of the air spring cover to the rubber bellows is achieved by means of nuts which are screwed from above onto the welded-on welding bolts. This creates an airtight seal between the air spring cover and the rubber bellows. This compact assembly is called an "air spring". The state of the art according to the above description is illustrated in Fig. 1.

Welded on welding bolts with screwed on nuts are also used to mount air springs in vehicle bodies or in many other industrial applications.

The disadvantages of the existing clamping ring design are that the existing clamping ring design has high accuracy requirements when welding the welding bolts to the clamping ring. The clamping bolts must be welded to the clamping ring with high precision with respect to their axial symmetry with the holes in the air spring cover.

The existing design of the clamping ring also has a high technological and energy consumption for the process of welding the welding screws to the clamping ring.

A further disadvantage is that the large air gap between the weld used to attach the welding bolt to the clamping ring and the air spring cover often results in deformation of the bottom of the clamping ring in the direction of the cover when the air spring cover is mounted or when a complete air spring is mounted in a vehicle body or other industrial application.

### SUMMARY OF THE INVENTION

The solution according to the present invention consists in modifying the clamping mechanism by changing the design of the clamping ring and its functional elements, which consists in replacing at least one clamping bolt, which serves for fixing the air spring cover or for mounting the air spring in the housing, by a press bolt with a screwed-in expansion nut.

To ensure the strength of the press bolt attachment to the steel extrusion, the bottom of the steel extrusion of the clamping ring is provided with a purposely formed hole for pressing the press bolt. It is an obvious requirement that the steel moulding of the clamping ring has been machined into its final form after pressing. The advantage of the present invention is particularly apparent when all clamping bolts are replaced in this way.

In this way, the disadvantages of the current state of the art are eliminated, since the creation of a hole in a steel moulding can be carried out with a high precision of hundredths of a millimetre. In contrast, the creation of a precise or very precise positioning and axial symmetry for the welding of the welding screw, i.e. so as to ensure the passage of the welded welding bolt through the holes in the air spring cover and the mounting plate, is considerably more technologically and energetically demanding. Thus, the holes for the press bolts and/or the holes in the cover and/or the mounting plate may have almost identical diameters, the difference of which is preferably less than 1 mm, which is always slightly larger than the body of the press bolt, i.e. the holes in the cover may have a smaller clearance.

In order to maintain a certain tolerance during welding, it is necessary to oversize the holes by up to several millimetres, which has the undesirable effect of loosening, as the bolt and thus the entire air spring can move laterally if the nut is not tightened correctly. If the welding bolt is incorrectly welded, it may also break off and thus limit the function of the entire air spring in use. In the absence of oversizing of the holes in the solution according to the state of the art, it would not be possible to ensure the passage of the bolts through the holes and at the same time there would be a risk of damage or breakage of the welded bolt and loss of strength of the connection. It must be borne in mind that the clamping mechanism, including the air spring structure, is subject to vibrations of various frequencies and considerable stresses during its use, and it is therefore essential that the air spring attachment be firmly and properly secured.

When the welded welding bolt is subjected to lateral stress or due to its inaccurate positioning on the clamping ring, or due to axial misalignment of the welded welding bolt and the mounting holes, there is a risk of breaking the weld used in the state of the art. Ensuring a reliable connection by which the bolt is fixed to the clamping ring not only affects the safety of the use of the entire air spring, but also avoids possible damage and loss of function of the product in which the air spring is installed.

Prior to the pressing of the press bolts, the bottom of the steel moulding of the clamping ring is provided with holes which may be formed by various methods, including cutting, drilling or burning, and which are axially symmetrical with the holes in the air spring cover through which the press bolt passes when the air spring cover is fitted to the rubber bellows.

The press bolts are pressed into the bottom of the steel moulding of the clamping ring so that the head of the press bolt is pressed into the outer surface of the steel moulding of the clamping ring against which the rubber bellows rests. This design is characterised by the fact that the head of the press bolt does not protrude beyond the surface of the outer surface of the steel moulding of the clamping ring and thus does not cause possible damage to the outer wall of the rubber bellows, which abuts on the outer surface of the steel moulding of the clamping ring. Damage to the outer wall of the rubber bellows would also limit the function of the entire air spring.

Further, the press bolts are pressed into the bottom of the steel moulding of the clamping ring in such a way that, after the head of the press bolt has been pressed into the steel moulding of the clamping ring, the outer surface of the bottom of the steel moulding of the clamping ring on which the rubber bellows rests remains smooth and free of sharp edges and burrs. This ensures that the rubber bellows will not be damaged during use of the air spring and thus limit the function of the entire air spring.

It also applies that the press bolts are pressed into the steel moulding of the clamping ring so that after pressing, a flat seating surface for the expansion nut or for an expansion washer is formed on the inner surface of the steel moulding of the clamping ring. Expansion washers may be placed either below or above the expansion nut. This solution is advantageous over the prior art according to FIG. 1 in that the air gap in the area between the bottom of the clamping ring and the air spring cover is eliminated and deformation in this part of the clamping ring is prevented. The expansion nuts alone and in combination with the expansion washers serve as an additional support surface for the seating of the cover, thereby preventing deformation and overcoming the material strength in the area at the bottom of the clamping ring.

After pressing the press bolts into the steel moulding of the clamping ring, expansion nuts or expansion nuts with expansion washers are screwed onto the press bolts so that after screwing in the expansion nuts, or expansion nuts supported by expansion washers, a flat seating area is created between the top of the side walls of the clamping ring, on which the air spring cover is seated when the air spring is assembled.

When assembling the air spring, the cover of the air spring fits on the top of the side walls of the clamping ring and also on the surface of the bolted expansion nut, or on the surface of the expansion washer, which is used to support the expansion nut. As already mentioned above, this prevents both deformation of the bottom of the steel moulding of the clamping ring when assembling the complete air spring and the possible tearing out of the press bolts when installing the air spring in the housing.

To prevent accidental loosening of the nuts, e.g. when transporting the clamping rings before completing the air spring, the screwed-in expansion nuts can be secured with a suitable fixing adhesive.

### LIST OF FIGURES

Fig. 1 shows a side section of the air spring portion according to the state-of-the-art design of the clamping ring;
Fig. 2a shows a side section of air spring portion with a clamping mechanism comprising a clamping ring design according to the present invention;
Fig. 2b shows a side section of a portion of the clamping mechanism comprising a clamping ring and press bolts employing a combination of expansion nuts and expansion washers;
Fig. 3 shows a top view of a portion of the clamping mechanism showing the clamping ring with welded on welding bolts according to the prior art;
Fig. 4 shows a top view of a portion of a clamping mechanism according to the present invention with the apparent clamping ring and press-fitted press bolts provided with an expansion nut;

### EXAMPLES OF EMBODIMENT OF THE INVENTION

### Example 1

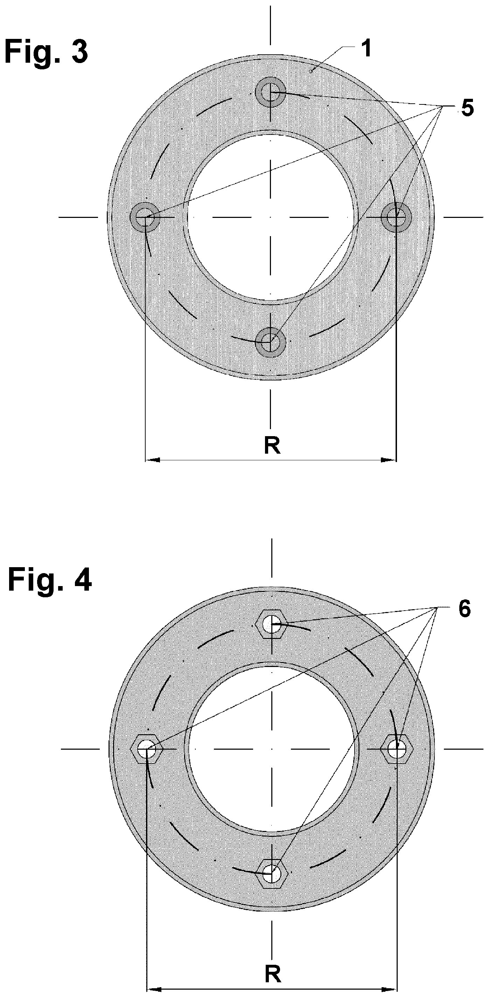

The air spring clamping mechanism according to Figs. 2a and 4, comprising a clamping ring 1 in the form of a steel moulding with a projection on the inner edge of the ring 1 for holding a rubber bellows 4, wherein the outer edge of the clamping ring 1 is provided with a side wall 12 having a top 13, on which the air spring cover 3 rests. The clamping ring 1 has a bottom 11, in which four symmetrically arranged holes 14 for press bolts 6 are formed on a pitch circle R, a head 61 of the bolt 6 being pressed into the lower wall of the bottom 11 of the clamping ring 1 so that the head 61 does not protrude beyond the surface of this lower wall of the bottom 11 and, at the same time, the head 61 and the adjacent surrounding part of the bottom of the clamping ring 11 are smooth without sharp edges or burrs after the press bolt 6 has been pressed in.

The press bolts 6 are provided with expansion nuts 8, the upper surface of which is level with the plane O which connects the tops 13 of the side walls 12 of the clamping ring 1. The press bolts 6 are fitted with an air spring cover 3, which rests on the tops of the side walls 13 of the clamping ring 1 and rests on the expansion nuts 8 with its lower face. On the cover 3 is mounted an assembly or mounting plate 2, which is attached to the press bolts 6 by means of nuts 7. Both the cover 3 and the plate 2 contain intentionally formed holes for the passage of the press bolts 6 which are axially symmetrical with the holes 14 of the clamping ring 1.

### Example 2

The air spring clamping mechanism according to Figs. 2b and 4, which comprises elements as according to Example 1, except that it further comprises expansion washers 81 to compensate for the gap between the expansion nut 8 and the plane O.

### Example 3

The air spring clamping mechanism according to any one of the preceding examples, wherein the holes 14 and/or the holes in the cover 3 and/or the plate 2 provide for free passage of the bolt 6 body with a very small dimensional play, wherein the difference in the size of the diameter of the hole 14 and the bolt 6 body does not exceed 1 mm.

### INDUSTRIAL UTILIZATION

The invention is industrially applicable in the field of manufacture, assembly and servicing of air springs used in vehicles and machines.

### LIST OF REFERENCE MARKS:

1 - clamping ring
11 - bottom of the clamping ring
12 - side wall of the clamping ring
13 - top of the side walls of the clamping ring
14 - hole for press bolt
2 - assembly or mounting plate
3 - air spring cover
4 - rubber bellows
5 - welding bolt
51 - weld
6 - press bolt
61 - head of the press bolt
7 - nut
8 - expansion nut
81 - expansion washer
9 - air gap
R - pitch circle
O - plane of the seating surface of the clamping ring on which the air spring cover is seated

## Claims

1. An air spring clamping mechanism comprising a clamping ring (1) in the form of a steel moulding with a projection on the inner edge of the ring (1) for holding a rubber bellows (4), wherein the outer edge of the clamping ring (1) is provided with a side wall (12) having a top (13) on which an air spring cover (3) of the air spring rests, **characterized in that** the clamping ring (1) has in the lower part a bottom (11) which is provided with at least one hole (14) for a press bolt (6), a head (61) of the bolt (6) being pressed into the lower wall of the bottom (11) of the clamping ring (1) so that so that the head (61) does not protrude above the surface of this bottom wall of the bottom (11) and at the same time the head (61) and the adjacent part of the bottom (11) are smooth without sharp edges or burrs, the press bolt (6) being provided with an expansion nut (8) the whole or the uppermost surface of which passes through the plane (O), which connects the tops (13) of the side walls (12) of the clamping ring (1), the press bolt (6) being fitted with an air spring cover (3) which fits over the tops (13) of the side walls of the clamping ring (1) and rests with its lower face on the expansion nut (8) or the uppermost part thereof.

2. The clamping mechanism according to claim 1, **characterized in that** it comprises four or more press bolts (6), wherein the holes (14) are symmetrically arranged on a pitch circle (R).

3. The clamping mechanism according to claim 1 or 2, **characterized in that** an assembly or mounting plate (2) is mounted on the cover (3), wherein the plate (2) is attached to the press bolts (6) by nuts (7), and the cover (3) and the plate (2) comprise deliberately formed holes for the passage of the press bolts (6) which are axially symmetrical with the holes (14) of the clamping ring (1).

4. The clamping mechanism according to any one of claims 1 to 3, **characterized in that** the holes (14) and/or the holes in the cover (3) and/or the plate (2) have a diameter that is always larger than the diameter of the body of the bolts (6).

5. The clamping mechanism according to any one of claims 1 to 4, **characterized in that** at least one expansion washer (81) is fitted between the bottom (11) and the cover (3) on the bolt (6), wherein if the washer (81) is positioned above the expansion nut (8), then the entire upper surface or the uppermost part thereof of said expansion washer (81) passes through the plane (O) instead of the upper surface of the expansion nut (8).

6. An air spring, **characterized in that** it is provided with a clamping mechanism according to any one of claims 1 to 5.

## Patentansprüche

1. Klemmvorrichtung für Luftfeder, bestehend aus einem Klemmring (1) in Form eines Stahlgussteils mit einem Vorsprung am Innenrand des Rings (1) zum Halten eines Gummibalgs (4), wobei der Außenrand des Klemmrings (1) mit einer Seitenwand (12) versehen ist, die eine Oberseite (13) aufweist, auf der eine Luftfederabdeckung (3) der Luftfeder aufliegt, **dadurch gekennzeichnet, dass** der Klemmring (1) im unteren Teil einen Boden (11) aufweist, der mit mindestens einem Loch (14) für einen Pressbolzen (6) versehen ist, wobei ein Kopf (61) des Bolzens (6) in die untere Wand des Bodens (11) des Klemmrings (1) eingepresst ist, so dass der Kopf (61) nicht über die Oberfläche dieser unteren Wand des Bodens (11) hinausragt und gleichzeitig der Kopf (61) und der angrenzende Teil des Bodens (11) glatt sind, ohne scharfe Kanten oder Grate, wobei der Pressbolzen (6) mit einer Spreizmutter (8) versehen ist, deren gesamte oder oberste Fläche durch die Ebene (O) verläuft, die die Oberseiten (13) der Seitenwände (12) des Klemmrings (1) verbindet, wobei der Pressbolzen (6) eine Luftfederabdeckung (3) aufweist, die über die Oberseiten (13) der Seitenwände des Klemmrings (1) passt und mit ihrer Unterseite auf der Spreizmutter (8) oder deren oberstem Teil aufliegt.

2. Die Klemmvorrichtung nach Anspruch 1, **dadurch gekennzeichnet, dass** sie vier oder mehr Pressbolzen (6) umfasst, wobei die Löcher (14) symmetrisch auf einem Teilkreis (R) angeordnet sind.

3. Die Klemmvorrichtung nach Anspruch 1 oder 2, **dadurch gekennzeichnet, dass** an der Abdeckung (3) eine Montage- oder Befestigungsplatte (2) angebracht ist, wobei die Platte (2) mittels Muttern (7) an den Pressbolzen (6) befestigt ist, und die Abdeckung (3) sowie die Platte (2) gezielt ausgebildete Löcher für den Durchgang der Pressbolzen (6) aufweisen, die axial symmetrisch zu den Löchern (14) des Klemmrings (1) sind.

4. Die Klemmvorrichtung nach einem der Ansprüche 1 bis 3, **dadurch gekennzeichnet, dass** die Löcher (14) und/oder die Löcher in der Abdeckung (3) und/oder der Platte (2) einen Durchmesser aufweisen, der stets größer ist als der Durchmesser des Schafts der Bolzen (6).

5. Die Klemmvorrichtung nach einem der Ansprüche 1 bis 4, **dadurch gekennzeichnet, dass** mindestens eine Spreizscheibe (81) zwischen dem Boden (11) und der Abdeckung (3) auf dem Bolzen (6) angebracht ist, wobei, wenn die Spreizscheibe (81) oberhalb der Spreizmutter (8) positioniert ist, dann die gesamte Oberseite oder der oberste Teil davon der genannten Spreizscheibe (81) anstelle der Oberseite der Spreizmutter (8) die Ebene (O) durchquert.

6. Eine Luftfeder, **dadurch gekennzeichnet, dass** sie mit einer Klemmvorrichtung nach einem der Ansprüche 1 bis 5 versehen ist.

## Revendications

1. Mécanisme de serrage pour ressort pneumatique comprenant une bague de serrage (1) se présentant sous la forme d'une pièce moulée en acier, comportant une saillie sur le bord intérieur de la bague (1) destinée à maintenir un soufflet en caoutchouc (4), le bord extérieur de la bague de serrage (1) étant muni d'une paroi latérale (12) comportant une partie supérieure (13) sur laquelle repose un couvercle de ressort pneumatique (3), **caractérisé en ce que** la bague de serrage (1) comporte, dans sa partie inférieure, un fond (11) muni d'au moins un trou (14) destiné à recevoir un boulon de sertissage (6), la tête (61) du boulon (6) étant enfoncée dans la paroi inférieure du fond (11) de la bague de serrage (1) de telle sorte que la tête (61) ne dépasse pas de la surface de cette paroi inférieure du fond (11) et que, dans le même temps, la tête (61) et la partie adjacente du fond (11) présentent une surface lisse, sans arêtes vives ni bavures, le boulon de sertissage (6) étant muni d'un écrou d'expansion (8) dont la totalité ou la partie la plus haute de la surface supérieure traverse le plan (O) reliant les parties supérieures (13) des parois latérales (12) de la bague de serrage (1), le boulon de sertissage (6) étant muni d'un couvercle de ressort pneumatique (3) qui s'adapte sur les parties supérieures (13) des parois latérales de la bague de serrage (1) et repose par sa face inférieure sur l'écrou d'expansion (8) ou sur la partie la plus élevée de celui-ci.

2. Mécanisme de serrage selon la revendication 1, **caractérisé en ce qu'**il comprend äu moins quatre boulons de sertissage (6), les trous (14) étant disposés symétriquement sur un cercle primitif (R).

3. Mécanisme de serrage selon la revendication 1 ou 2, **caractérisé en ce qu'**une plaque d'assemblage ou de montage (2) est montée sur le couvercle (3), ladite plaque (2) étant fixée aux boulons de sertissage (6) par des écrous (7), et le couvercle (3) et la plaque (2) comportent des trous formés intentionnellement pour le passage des boulons de sertissage (6), lesdits trous étant disposés axialement en correspondance avec les trous (14) de la bague de serrage (1).

4. Mécanisme de serrage selon l'une quelconque des revendications 1 à 3, **caractérisé en ce que** les trous (14) et/ou les trous du couvercle (3) et/ou de la plaque (2) présentent chacun un diamètre supérieur au diamètre du corps des boulons (6).

5. Mécanisme de serrage selon l'une quelconque des revendications 1 à 4, **caractérisé en ce qu'**au moins une rondelle d'expansion (81) est montée entre le fond (11) et le couvercle (3) sur le boulon (6), dans lequel, lorsque la rondelle (81) est positionnée au-dessus de l'écrou d'expansion (8), la totalité de la surface supérieure ou la partie la plus élevée de ladite rondelle d'expansion (81) traverse le plan (O) à la place de la surface supérieure de l'écrou d'expansion (8).

6. Ressort pneumatique, **caractérisé en ce qu'**il est muni d'un mécanisme de serrage selon l'une quelconque des revendications 1 à 5.
